# FASCICULE DE BREVET EUROPEEN

(11) **EP 3 146 610 B1**
(45) Date de publication et mention de la délivrance du brevet: **07.08.2019**
(21) Numéro de dépôt: 15728911.7
(22) Date de dépôt: 18.05.2015
(51) Int. Cl.: H02J 3/40, H02J 3/38, A63B 21/005, F03G 7/08

(54) **APPAREIL DE PRODUCTION D'ÉNERGIE ÉLECTRIQUE, INFRASTRUCTURE PRODUCTRICE D'ÉNERGIE ÉLECTRIQUE COMPRENANT UNE PLURALITÉ DE TELS APPAREILS, ET BÂTIMENT ÉQUIPÉ D'UNE TELLE INFRASTRUCTURE**
VORRICHTUNG ZUR ERZEUGUNG VON ELEKTRISCHER ENERGIE, INFRASTRUKTUR ZUR ERZEUGUNG VON ELEKTRISCHER ENERGIE MIT EINER VIELZAHL SOLCHER VORRICHTUNGEN UND MIT SOLCH EINER INFRASTRUKTUR AUSGESTATTETES GEBÄUDE
APPARATUS FOR PRODUCING ELECTRICAL ENERGY, INFRASTRUCTURE PRODUCING ELECTRICAL ENERGY COMPRISING A PLURALITY OF SUCH APPARATUS, AND BUILDING EQUIPPED WITH SUCH AN INFRASTRUCTURE

(30) Priorité: 19.05.2014 FR 1454460
(43) Date de publication de la demande: 29.03.2017
(73) Titulaire: Arnould, Christophe, 31410 Longages (FR)
(72) Inventeur: Arnould, Christophe, 31410 Longages (FR)
(74) Mandataire: Bringer, Mathieu
(86) Numéro de dépôt international: PCT/FR2015/051284
(87) Numéro de publication internationale: WO 2015/177444

(56) Documents cités:
- EP-A1- 2 495 868
- EP-A1- 2 638 936
- AU-A4- 2011 100 757
- DE-A1-102005 007 575
- DE-U1-202008 004 354
- DE-U1-202011 003 932
- GB-A- 2 483 161
- US-A- 5 258 700
- US-A1- 2010 197 461
- US-A1- 2011 263 384
- US-A1- 2013 252 786
- US-A1- 2013 293 023

## Description

### 1. Domaine technique de l'invention

L'invention concerne un appareil de production d'énergie électrique obtenue à partir d'un travail mécanique résultant d'une activité physique d'un être animé, tel qu'un humain. L'invention concerne également une infrastructure productrice d'une énergie électrique comprenant une pluralité d'appareils de production d'énergie électrique selon l'invention. L'invention concerne également un bâtiment équipé d'une infrastructure selon l'invention.

### 2. Arrière-plan technologique

Les besoins en énergie électrique ne cessent d'être de plus en plus importants dans la vie quotidienne. En parallèle, la recherche d'une énergie, dite verte, apparait comme une nécessité inéluctable pour limiter au maximum le recours aux énergies les plus polluantes.

Il existe donc un besoin d'optimiser les formes de production d'énergie électrique, et notamment de proposer des moyens de production inépuisables qui utilisent comme énergie de base, l'activité humaine.

A ce titre, il a déjà été proposé un certain nombre d'appareils de production d'énergie électrique capable de transformer un effort mécanique physique en une énergie électrique.

Par exemple, le document FR 2 969 422 décrit un élément de sol générateur d'énergie électrique comprenant un générateur d'énergie piézoélectrique. Cet élément de sol est par exemple destiné à équiper des voies piétonnières de sorte que le passage de piétons sur cet élément génère de l'énergie électrique.

WO 2010/107632 décrit un tapis de course comprenant une courroie reliée à un alternateur, lui-même relié à une batterie de stockage. Un être animé tel qu'une humain qui effectue un jogging sur le tapis de course peut donc générer une énergie électrique, par la mise en rotation de la courroie, qui elle-même entraine l'alternateur en rotation. L'activité humaine est donc utilement mise à profit pour générer une énergie électrique qui est stockée dans une batterie de stockage pour une utilisation ultérieure.

L'inconvénient de chacun de ces appareils est notamment qu'ils ne sont pas conçus pour pouvoir coopérer avec d'autres appareils pour former une véritable centrale de production d'énergie électrique. Aussi, leur contribution à la production d'une énergie électrique, et par extension leur contribution à la réduction de l'utilisation des énergies non vertes, est faible.

Il existe aujourd'hui un besoin de disposer d'une solution à plus grande échelle permettant de faire en sorte que l'ensemble des appareils individuels capables de produire une énergie électrique par une activité humaine puisse coopérer pour former une véritable centrale de production d'énergie électrique. A ce titre, il existe un besoin de disposer d'une infrastructure productrice d'énergie électrique.

Il existe également un besoin de disposer d'un appareil de production d'énergie électrique qui puisse être relié directement à cette infrastructure de production d'énergie électrique, sans imposer des modifications structurelles de l'infrastructure et/ou de l'appareil. En d'autres termes, il existe un besoin de disposer d'un appareil de production d'énergie électrique présentant une fonctionnalité de « prêt à l'emploi » (plus connu sous la dénomination anglaise de *plug&play*) pouvant ainsi être directement connecté à l'infrastructure pour participer à la production d'énergie électrique.

EP2638936 A1 montre un ensemble de générateurs produisant de l'énergie électrique à partir d'un travail mécanique résultant d'une activité physique d'un être animé, lesdits générateurs étant connectés sur un bus DC continu par l'intermédiaire d'onduleurs. L'énergie produite est injectée sur le bus continu et est injectée de manière synchronisée sur le réseau par l'intermédiaire d'un onduleur. Ce document sert de base aux préambules des revendications 1 et 14.

### 3. Objectifs de l'invention

L'invention vise à fournir une infrastructure productrice d'énergie électrique comprenant une pluralité d'appareils de production d'énergie électrique à partir d'un effort physique d'un être animé.

L'invention vise aussi à fournir, dans au moins un mode de réalisation de l'invention, une infrastructure qui autorise un raccordement simple d'un appareil de production d'énergie électrique selon l'invention.

L'invention vise aussi à fournir, dans au moins un mode de réalisation de l'invention, une infrastructure qui peut directement produire une énergie compatible avec un réseau externe d'un fournisseur d'énergie électrique de manière à pouvoir réinjecter l'énergie produite sur ce réseau externe.

L'invention vise aussi à fournir, dans au moins un mode de réalisation de l'invention, une infrastructure qui peut être isolée, sur commande ou spontanément, d'un réseau externe d'un fournisseur d'énergie électrique.

L'invention vise aussi à fournir, dans au moins un mode de réalisation de l'invention, une infrastructure qui ne nécessite le recours à des dispositifs de stockage d'énergie tels que des batteries de stockage.

L'invention vise aussi à fournir un appareil de production d'une énergie électrique destiné à être utilisé avec une infrastructure selon l'invention.

L'invention vise aussi à fournir, dans au moins un mode de réalisation, un appareil prêt à l'emploi (*plug & play* en dénomination anglaise) qui peut être directement connecté à une infrastructure selon l'invention.

L'invention vise aussi à fournir un bâtiment équipé d'une infrastructure selon l'invention.

### 4. Exposé de l'invention

L'invention est définie dans les revendications 1 et 14. Des modes particuliers de réalisation sont définis dans les revendications dépendantes.

Pour ce faire, l'invention concerne donc une infrastructure productrice d'énergie électrique comprenant :
- une colonne de distribution d'énergie électrique, dite colonne vertébrale de l'infrastructure, adaptée pour véhiculer de l'énergie électrique vers un réseau d'utilisation de cette énergie,
- une pluralité d'appareils de production d'énergie électrique reliés à ladite colonne vertébrale et adaptés pour injecter directement sur ladite colonne vertébrale au moins une partie de l'énergie générée, chaque appareil étant configuré pour pouvoir produire de l'énergie électrique à partir d'un effort mécanique physique exercé par un être animé.

Une infrastructure selon l'invention permet donc de combiner sur une même colonne de distribution d'énergie électrique l'ensemble des énergies produites par une pluralité d'appareils de production. Chaque appareil est configuré pour pouvoir produire une énergie électrique à partir d'un effort mécanique physique exercé par un être animé, tel qu'un humain.

Une infrastructure selon l'invention permet donc de produire de l'énergie, dite verte, en transformant l'énergie fournie par un être animé, tel qu'un humain, notamment un sportif, en énergie électrique.

L'infrastructure selon l'invention est en outre remarquable en ce que chaque dispositif de production d'énergie est adapté pour injecter directement une partie de l'énergie produite sur la colonne vertébrale. Ainsi, chaque appareil est prêt à l'emploi (*ou plug & play* en dénomination anglaise) et peut être directement relié à la colonne vertébrale pour fournir de l'énergie électrique.

Une infrastructure selon l'invention comporte une pluralité d'appareils de production dont chaque appareil peut, à tout moment, injecter de l'énergie électrique sur la colonne de distribution, dès qu'un être animé exerce un effort sur cet appareil. Une infrastructure selon l'invention est très souple d'utilisation et peut à tout moment intégrer un nouvel appareil de production d'énergie électrique.

Ainsi, une infrastructure selon l'invention est caractérisée en ce qu'elle comprend au moins un module de synchronisation, dit module de référence, relié à ladite colonne vertébrale et à chaque appareil de production d'énergie électrique, ledit module de référence étant configuré pour identifier et former un signal de synchronisation, dit signal de référence, adapté pour circuler sur ladite colonne vertébrale et pour permettre la synchronisation de chaque appareil de production avec ladite colonne vertébrale de sorte que chaque appareil puisse directement injecter de l'énergie sur ladite colonne vertébrale.

Le module de référence permet de synchroniser chaque appareil de production relié à la colonne vertébrale de l'infrastructure sur une porteuse de référence.

Le module de référence est configuré pour identifier et former une porteuse de référence selon les situations rencontrées. Ce module peut créer une porteuse de référence si aucune porteuse n'est disponible sur la colonne vertébrale de l'infrastructure. Pour ce faire, le module scrute en permanence le réseau d'utilisation, qui comprend par exemple un réseau externe d'un fournisseur d'énergie électrique sur lequel l'infrastructure cherche à injecter de l'énergie électrique, et détecte les variations d'amplitude, de tension, d'impédance et de fréquence. Si aucun signal n'est présent sur ce réseau externe du fournisseur d'énergie électrique, le module crée un signal de référence, par exemple par le biais d'un oscillateur autonome adapté pour créer un signal et l'injecter sur la colonne vertébrale.

Si une porteuse de référence est déjà présente sur le réseau externe et donc déjà présente sur la colonne vertébrale, le module de référence identifie ce signal et en crée une image, fidèle en amplitude, en forme et en fréquence, de manière à le transmettre aux appareils de production d'énergie électrique. Les appareils se synchronisent alors sur cette porteuse de référence et pourront injecter de l'énergie produite sur la colonne vertébrale, elle-même reliée au réseau externe.

Le module de référence comprend avantageusement un relais qui pilote un premier contacteur agencé entre la colonne vertébrale de l'infrastructure et le réseau d'utilisation, qui est par exemple le réseau externe d'un fournisseur d'électricité, et un deuxième contacteur agencé entre un oscillateur autonome et la colonne vertébrale de l'infrastructure.

Dans le cas où le module identifie une porteuse, le signal de référence est une image du signal circulant sur ledit réseau externe.

Dans le cas où le module de référence ne détecte aucun signal sur le réseau externe, et donc aucun signal sur la colonne vertébrale, le relais commande l'ouverture du premier contacteur de manière à isoler l'infrastructure du réseau externe. En parallèle, le relais pilote la fermeture du second contacteur de manière qu'un signal créé par l'oscillateur soit injecté sur la colonne vertébrale pour servir de nouveau signal de référence. Cet oscillateur est par exemple configuré pour injecter un signal, identique en amplitude et en fréquence à celui préalablement fourni par le réseau externe du fournisseur d'énergie électrique.

Lorsque l'infrastructure est isolée du réseau externe, l'énergie électrique produite est exclusivement utilisée pour alimenter des dispositifs consommateurs d'énergie électrique. En particulier, ledit réseau d'utilisation peut comprendre, en plus du réseau externe, un réseau interne formé d'une pluralité de dispositifs consommateurs d'électricité.

Par exemple, dans le cadre d'une utilisation de l'infrastructure selon l'invention dans un bâtiment, l'énergie produite peut servir à faire fonctionner les éclairages, chauffages électriques et autres dispositifs électriques du bâtiment, qui forment le réseau interne selon l'invention.

Une infrastructure selon l'invention comprend au moins un module de référence. Selon une variante, il peut comprendre plusieurs modules de référence, par exemple un module de référence par appareil de production d'énergie. Dans le cas où chaque appareil est équipé d'un module de référence, l'infrastructure comprend en plus des moyens pour déterminer quel module de référence est prioritaire pour créer le signal de référence, pour éviter les interférences sur la colonne vertébrale. Ces moyens sont par exemple un ordre de priorité donné à chaque module. Si le module le plus prioritaire ne crée pas le signal de référence dans un laps de temps prédéterminé, c'est le module à la priorité suivante qui prend la main, et ainsi de suite jusqu'à ce que le signal de référence soit créé sur la colonne vertébrale.

Avantageusement et selon l'invention, chaque appareil de production d'énergie électrique comprend un module de production d'énergie comprenant :
- des moyens de réception et de lecture dudit signal de référence,
- des moyens de production d'un signal électrique synchronisé sur ledit signal de référence,
- des moyens de couplage/découplage de l'appareil à ladite colonne vertébrale.

Le signal de référence peut être véhiculé vers chaque appareil de production soit par la colonne vertébrale de l'infrastructure en tant que tel, soit par un réseau de synchronisation dédié.

Le module de production permet de produire un signal de puissance fidèle en amplitude, en fréquence et en phasage au signal de référence qui circule sur la colonne vertébrale qui, rappelons le, est soit créé par le module de référence, soit issu du réseau externe par identification et reproduction par le module de référence.

Les moyens de production d'un signal synchronisé sur le signal de référence comprennent par exemple une source d'énergie du type génératrice à courant continu. Les moyens comprennent également des interrupteurs électroniques du type transistors pour hacher le signal continu fourni par la génératrice à courant continu. Les interrupteurs sont par exemple commandés par le biais d'une commande du type MLI (Modulation de Largeur d'Impulsions, aussi connue sous les termes anglais de PWM, *Pulse Width Modulation*) dont la fréquence modulante est l'image de la fréquence du signal de référence.

Les moyens de couplage/découplage permettent de coupler l'appareil de production à la colonne vertébrale pour y injecter l'énergie produite lorsque les conditions d'injection sont respectées ou de désaccoupler l'appareil si les conditions l'imposent. Par exemple, l'appareil compare le signal produit par les moyens de production audit signal de référence. Si le signal est identique en amplitude, en forme et en phasage au signal de référence, les moyens de couplage commandent l'accouplement de l'appareil à la colonne vertébrale. Ces moyens comprennent par exemple un relais qui commande un contacteur agencé entre l'appareil de production et la colonne vertébrale.

Avantageusement et selon l'invention, au moins un appareil de production d'énergie comprend des moyens de fourniture d'une tension d'alimentation basse puissance reliés à au moins un module de référence pour pouvoir alimenter ledit module de référence.

Cette variante avantageuse permet d'alimenter directement le module de référence par une partie de l'énergie produite par au moins un appareil de production d'énergie. Cette variante est particulièrement avantageuse parce qu'elle confère une autonomie totale à l'infrastructure selon l'invention. Ainsi, dès qu'un appareil de production commence à produire de l'énergie électrique, une partie de l'énergie prélevée est utilisée pour alimenter le module de référence.

Avantageusement et selon l'invention, au moins un appareil de production d'énergie électrique est un équipement sportif choisi dans le groupe comprenant : un rameur, une bicyclette, un steppeur, un tapis roulant, une matrice de dalles, de sorte que l'activité physique générée sur cet équipement sportif génère de l'énergie électrique injectée sur la colonne de distribution.

Un appareil de production selon cette variante comprend donc, en plus du module de production d'énergie, des moyens d'actionnement de la génératrice du module de production. Ces moyens d'actionnement sont des moyens mécaniques qui assurent, par exemple, la rotation de la génératrice du module de production par un effort physique exercé par un humain. Dans le cas de la bicyclette, ces moyens d'actionnement sont par exemple un pédalier adapté pour entrainer en rotation une roue arrière, elle-même reliée à la génératrice du module de production.

Une infrastructure selon cette variante permet d'équiper par exemple une salle de sports de manière que l'activité physique des pratiquants contribue à créer de l'énergie électrique. Une telle salle de sports est donc éco-responsable et peut créer un engouement supplémentaire pour le sport en salle en permettant aux utilisateurs non seulement de s'entretenir et de se dépenser physiquement, mais également de participer à la réduction des énergies polluantes et contribuer à l'alimentation en courant des appareils internes au bâtiment ou extérieurs. Une telle salle de sports peut comprendre des moyens permettant à chaque utilisateur de connaitre sa propre contribution à la création d'énergie verte.

Avantageusement et selon l'invention, au moins un appareil de production d'énergie électrique comprend une génératrice de courant configurée pour pouvoir être entraînée en rotation par un effort mécanique physique exercé par un être animé.

Un tel appareil est par exemple un vélo dont la roue arrière entraine en rotation la génératrice de courant.

Avantageusement et selon l'invention, la génératrice de courant d'au moins un appareil de production d'énergie électrique est choisie dans le groupe comprenant : une génératrice à courant continu, une génératrice alternative monophasée et une génératrice alternative triphasée.

L'invention concerne également un bâtiment comprenant une infrastructure selon l'invention.

Avantageusement, un bâtiment selon l'invention comprend au moins une salle de sports comprenant une pluralité d'équipements sportifs, chaque équipement sportif formant un appareil de production d'énergie électrique relié à ladite colonne vertébrale de l'infrastructure.

Avantageusement, un bâtiment selon l'invention comprend une pluralité de dispositifs électriques consommateurs d'énergie électrique reliés à ladite infrastructure de manière à pouvoir être alimentés en énergie électrique par l'énergie produite par ladite infrastructure.

L'invention concerne également un appareil de production d'énergie électrique pour une infrastructure productrice d'énergie électrique comprenant une colonne de distribution d'énergie électrique, dite colonne vertébrale de l'infrastructure, adaptée pour véhiculer de l'énergie électrique vers un réseau d'utilisation de cette énergie.

Un appareil selon l'invention est configuré pour pouvoir produire de l'énergie électrique à partir d'un effort mécanique physique exercé par un être animé et est caractérisé en ce qu'il comprend un module de production d'une puissance électrique comprenant :
- des moyens de réception et de lecture d'un signal de synchronisation, dit signal de référence, identifié et/ou formé par un module de synchronisation, dit module de référence, relié à la colonne vertébrale et audit appareil, ledit signal de référence étant adapté pour circuler sur la dite colonne vertébrale et permettre la synchronisation de l'appareil sur la colonne vertébrale,
- des moyens de production d'un signal électrique synchronisé sur ledit signal de référence,
- des moyens de couplage/découplage de l'appareil à ladite colonne vertébrale.

L'invention concerne également une infrastructure, un bâtiment et un appareil de production d'énergie électrique caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une infrastructure productrice d'énergie électrique selon un mode de réalisation de l'invention,
- la figure 2 est une vue schématique d'une infrastructure productrice d'énergie électrique selon un mode de réalisation de l'invention,
- la figure 3 est une vue schématique d'une infrastructure productrice d'énergie électrique selon un mode de réalisation de l'invention,
- la figure 4 est une vue schématique d'une infrastructure productrice d'énergie électrique selon un mode de réalisation de l'invention,
- la figure 5 est une vue schématique d'un module de référence d'une infrastructure productrice d'énergie électrique selon un mode de réalisation de l'invention,
- la figure 6 est une vue schématique d'un module de production d'un appareil de production d'énergie selon un mode de réalisation de l'invention,
- la figure 7 est une vue schématique d'une infrastructure productrice d'énergie électrique selon un mode de réalisation de l'invention,
- la figure 8 est une vue schématique d'une partie d'un module de production d'un appareil de production selon un mode de réalisation de l'invention.

### 6. Description détaillée d'au moins un mode de réalisation de l'invention

Sur la figure, les échelles et les proportions ne sont pas strictement respectées et ce, à des fins d'illustration et de clarté.

Une infrastructure 8 productrice d'énergie électrique selon l'invention comprend une colonne de distribution d'énergie électrique, dite colonne 10 vertébrale de l'infrastructure, adaptée pour véhiculer de l'énergie électrique vers un réseau 9 d'utilisation de cette énergie.

Cette colonne 10 vertébrale est par exemple une installation électrique d'un bâtiment. Le réseau 9 d'utilisation de cette énergie est par exemple le réseau 11 d'un fournisseur d'énergie électrique, tel que le fournisseur public d'électricité, sur lequel l'énergie électrique produite par l'infrastructure 8 est injectée.

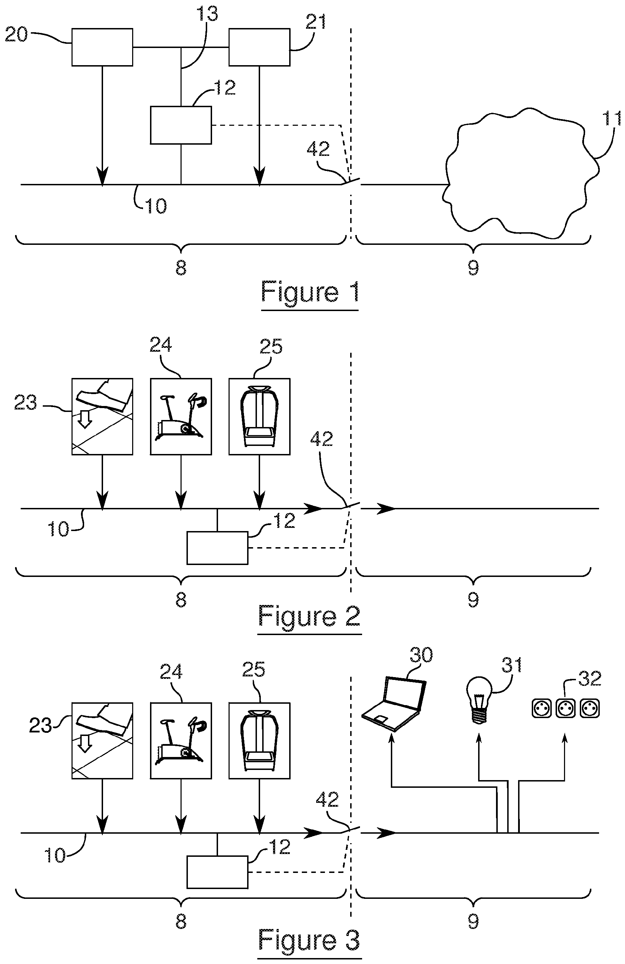

L'infrastructure 8 telle que représentée sur la figure 1 comprend en outre deux appareils 20, 21 de production d'énergie électrique reliés à la colonne 10 vertébrale. Chaque appareil est adapté pour injecter directement sur la colonne 10 vertébrale au moins une partie de l'énergie générée. Chaque appareil 20, 21 est configuré pour pouvoir produire de l'énergie électrique à partir d'un effort mécanique physique exercé par un humain.

L'infrastructure de la figure 1 comprend en outre un module de synchronisation, dit module 12 de référence, relié à la colonne 10 vertébrale et à chaque appareil 20, 22 de production d'énergie électrique.

Ce module 12 de référence est configuré pour identifier et/ou former un signal de synchronisation, dit signal de référence, adapté pour circuler sur la colonne 10 vertébrale et pour permettre la synchronisation de chaque appareil 20, 21 de production avec la colonne 10 vertébrale de sorte que chaque appareil 20, 21 puisse directement injecter de l'énergie électrique sur la colonne 10 vertébrale.

Sur la figure 1, le signal de référence fourni par le module 12 de référence est transmis aux appareils 20, 21 par le biais d'un réseau 13 de synchronisation dédié. Cela étant, dans d'autres modes de réalisation, tels que ceux décrits en lien avec les figures 2 et 3 notamment, le signal de référence est directement véhiculé par la colonne 10 vertébrale de sorte que le réseau 13 dédié n'apparait plus sur les figures 2 et 3.

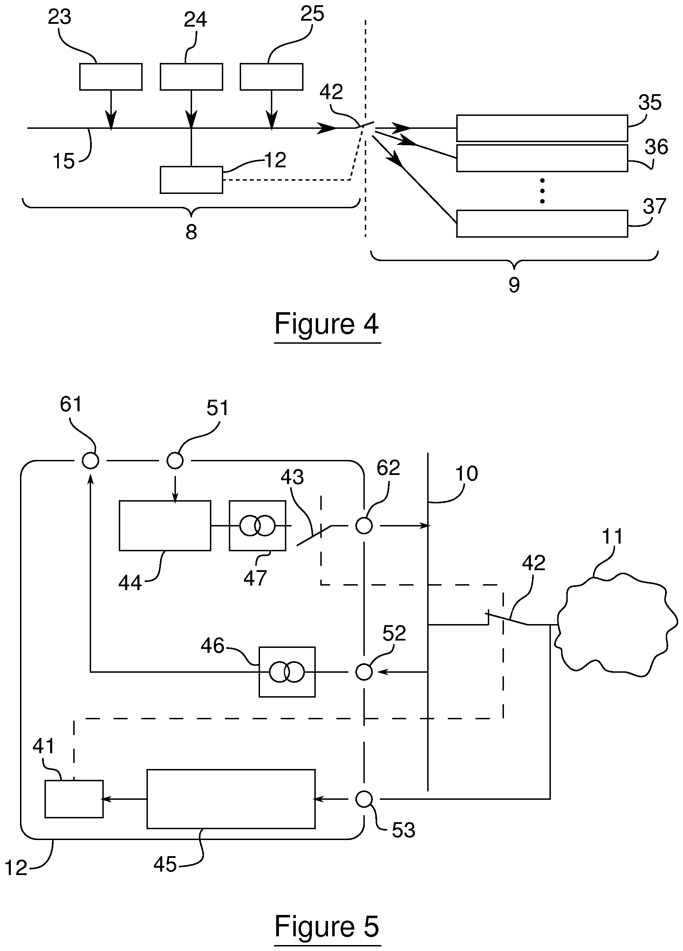

Le principe de fonctionnement et un mode de réalisation de ce module 12 de référence est décrit ci-après en lien avec la figure 5. Cette description détaillée précise également le rôle et le fonctionnement du contacteur 42, agencé entre l'infrastructure 8 et le réseau 9 d'utilisation et piloté par le module 12 de référence.

La figure 2 est une vue schématique d'une infrastructure 8 selon un mode de réalisation de l'invention sur laquelle des exemples d'appareils de production d'énergie électrique pouvant être mis en oeuvre dans une infrastructure selon l'invention sont représentés. Sur la figure 2, sont représentés un ensemble 23 de dalles productrices d'énergie électrique, un vélo 24 producteur d'énergie électrique et un tapis roulant 25 producteur d'énergie électrique. D'une manière générale, tous types d'appareils permettant de fournir une énergie électrique à partir d'un effort exercé par un être animé, tel qu'un humain, peuvent être utilisés dans la mise en oeuvre d'une infrastructure selon l'invention.

Un tel ensemble 23 de dalles permet de transformer les pressions exercées sur la dalle par des pratiquants qui exercent dessus une activité sportive (football, fitness, etc.) en une énergie électrique. Un tel ensemble s'inspire par exemple de celui décrit dans la demande de brevet US7432607 ou celui décrit dans la demande de brevet FR2971561.

Un vélo 24 producteur d'énergie électrique comprend par exemple une génératrice de courant montée sur la roue arrière d'un vélo de fitness.

Un tapis 25 roulant producteur d'énergie électrique comprend par exemple un alternateur relié à une courroie entraînée en rotation par un homme qui court sur le tapis.

La figure 3 représente l'infrastructure 8 de la figure 2 reliée à un réseau 9 d'utilisation qui prend la forme d'un réseau interne d'un bâtiment. Un tel réseau 9 d'utilisation comprend une pluralité de dispositifs 30, 31, 32 électriques consommateurs d'énergie.

Une infrastructure selon l'invention peut soit être destinée à injecter de l'énergie sur un réseau d'un fournisseur d'énergie électrique en vue par exemple de revendre une partie de l'énergie produite, soit être destinée à alimenter un réseau interne d'un bâtiment d'une infrastructure selon l'invention. Bien évidemment, les deux réseaux peuvent être alimentés en parallèle par une infrastructure selon l'invention.

Selon encore une autre variante représentée sur la figure 4, l'infrastructure selon un mode de réalisation de l'invention est reliée à une pluralité de réseaux 35, 36, 37 internes à des bâtiments voisins du bâtiment équipé de l'infrastructure 8 selon l'invention. Cet ensemble de réseaux internes forme le réseau 9 d'utilisation selon l'invention.

Selon une autre variante, le réseau d'utilisation est un réseau électrique extérieur à un bâtiment tel qu'un réseau d'éclairage public, un réseau d'alimentation des feux de signalisation, ou tout autre réseau extérieur. En variante ou en combinaison, la colonne vertébrale de l'infrastructure n'est pas agencée dans un bâtiment, mais directement à l'extérieur, par exemple sous une chaussée de la voirie, elle-même équipée de dalles de production d'énergie électriques.

La figure 5 est une vue d'un module 12 de référence selon un mode de réalisation de l'invention. Le module 12 de référence permet de synchroniser chaque appareil 23, 24, 25 de production relié à la colonne 10 vertébrale de l'infrastructure sur une porteuse de référence.

Le module 12 de référence comprend un relais 41 relié d'une part à un premier contacteur 42 agencé entre la colonne 10 vertébrale de l'infrastructure 8 et le réseau d'utilisation, qui prend la forme d'un réseau 11 externe d'un fournisseur d'électricité dans le mode de réalisation de la figure 5, et d'autre part à un second contacteur 43 agencé entre un oscillateur 44 autonome du module 12 de référence et la colonne 10 vertébrale de l'infrastructure.

Le relais 41 est lui-même piloté par un module 45 de mesure et de détection de la présence d'un signal de synchronisation sur le réseau d'utilisation, qui prend la forme d'un réseau 11 externe dans le mode de réalisation de la figure 5.

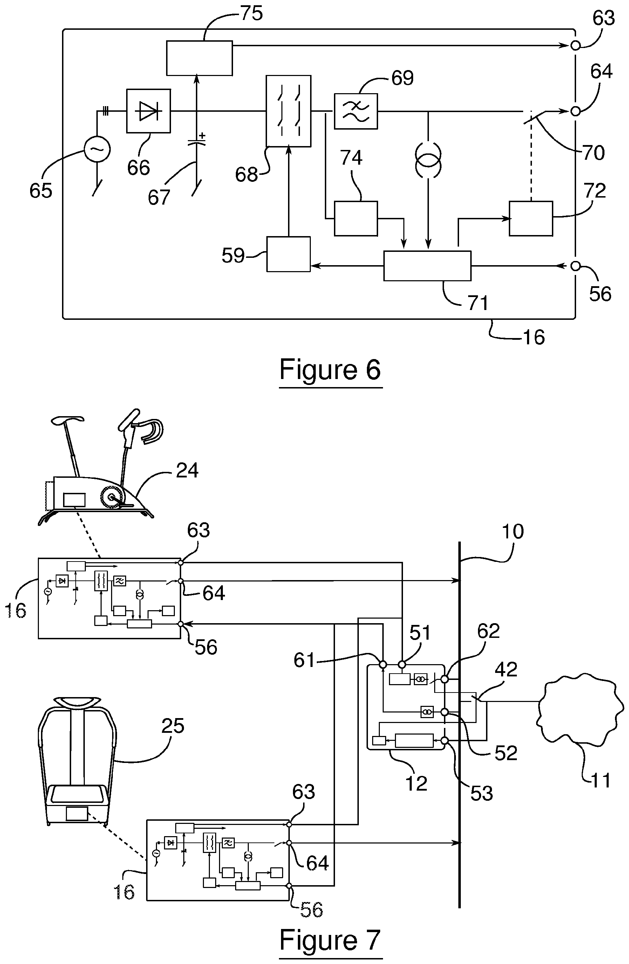

Le module 12 de référence comprend en outre une première entrée 51 d'alimentation du module. Cette première entrée 51 est alimentée en courant par un signal basse tension fourni par un appareil de production d'énergie, comme cela est décrit en détail en lien avec la figure 6. Cette première entrée 51 permet d'alimenter l'oscillateur 44 autonome du module 12 de référence et le module 45 de mesure et de détection d'un signal de synchronisation.

Le module 12 de référence comprend en outre une deuxième entrée 52 permettant de récupérer le signal de référence circulant sur la colonne 10 vertébrale le cas échéant. Ce signal de référence est isolé et abaissé par un module 46 d'isolation et d'abaissement avant d'être véhiculé vers une première sortie 61 reliée aux appareils 23, 24, 25 de production d'énergie électrique.

Le module 45 de mesure et de détection de la présence d'un signal de synchronisation est relié à une troisième entrée 53, adaptée pour recevoir le signal circulant sur la colonne vertébrale pour en mesurer la tension, la fréquence et l'impédance.

Le module 45 de mesure et de détection d'un signal de synchronisation est configuré pour déterminer les variations de tension, d'amplitude, de fréquence et d'impédance du signal circulant sur la colonne vertébrale 10. Le relais est configuré de sorte que si aucun signal n'est détecté, le relais 41 commande l'ouverture du premier contacteur 42 et la fermeture du second contacteur 43 de sorte que l'oscillateur 44 autonome puisse générer un signal de référence qui est injecté sur la colonne 10 vertébrale par une deuxième sortie 62 reliant l'oscillateur à la colonne 10 vertébrale. Cet oscillateur 44 est en outre associé à un module d'isolation et d'élévation 47. L'infrastructure 8 est alors totalement isolée du réseau 9 externe. Dans ce cas, l'infrastructure peut alimenter en énergie des dispositifs électriques internes au bâtiment équipé de l'infrastructure selon l'invention. Ces dispositifs électriques ne sont pas représentés sur les figures à des fins de clarté.

Si un signal de synchronisation est déjà détecté sur la colonne vertébrale 10, le relais 41 maintient la fermeture du premier contacteur 42 et l'ouverture du second contacteur 43.

La figure 6 est une vue d'un module 16 de production d'un appareil de production d'énergie électrique selon un mode de réalisation de l'invention.

Un tel module 16 de production peut équiper tous types d'appareil de production selon l'invention. En particulier, ce module 16 peut équiper un appareil de production d'énergie du type matrice 23 de dalles, un appareil de production du type vélo 24 producteur d'énergie et un appareil de production du type tapis roulant 25 producteur d'énergie. Chaque appareil comprend un module de production qui lui est propre.

Le module 16 de production comprend des moyens de réception et de lecture dudit signal de référence, des moyens de production d'un signal électrique synchronisé sur ledit signal de référence, et des moyens de couplage/découplage de l'appareil à ladite colonne vertébrale.

En particulier, les moyens de production d'un signal électrique comprennent une génératrice 65 qui peut être de tous types. Il peut par exemple s'agir d'une génératrice à courant continu, une génératrice alternative monophasée ou une génératrice alternative triphasée.

Dans le mode de réalisation de la figure 6, la génératrice 65 est une génératrice alternative triphasée. Cette génératrice 65 est entrainée en rotation par un effort mécanique physique exercé par un utilisateur.

Le signal généré par la génératrice 65 est redressé par un redresseur 66 et filtré par un filtre 67 pour obtenir un signal quasiment continu.

Ce signal continu est ensuite haché par l'intermédiaire d'interrupteurs 68 électroniques commandés par une commande du type MLI 59 dont la fréquence modulante est l'image du signal présent sur la colonne vertébrale et reçu par une entrée 56 reliée à la sortie 61 du module 12 de référence.

Le signal en sortie des interrupteurs 68 est filtré par un filtre 69 de manière à récupérer un signal d'amplitude et de fréquence identique au signal du fournisseur externe et compatible avec les dispositifs électroniques à alimenter. Par exemple, en France, le signal obtenu est un signal alternatif sinusoïdal 220 volts et de fréquence 50 Hz.

Les moyens de couplage/découplage comprennent un commutateur 70 relié à une sortie 64 reliée à la colonne 10 vertébrale. Le commutateur 70 est piloté par un relais 72, lui-même piloté par un comparateur 71 d'amplitude et de fréquence pour déterminer si le signal produit est bien synchronisé avec le signal de référence reçu par le module 16 de production au niveau de son entrée 56. Cet ensemble du relais 72 et du commutateur 70 forme les moyens de couplage/découplage du module 16 de production.

Le principe de la détection d'amplitude est le suivant. Lorsque la génératrice 65 démarre sous l'effet d'une action physique exercée par un humain sur la machine sur laquelle la génératrice est installée, telle que par exemple sur le vélo 24, l'amplitude du signal va augmenter progressivement. Lorsque cette amplitude atteint l'amplitude crête du signal de synchronisation présent sur la colonne 10 vertébrale, la condition d'amplitude est atteinte, et le signal produit par le module de production peut être injecté sur la colonne 10 vertébrale. Dans le mode de réalisation de la figure 6, l'amplitude à atteindre est prélevée après les interrupteurs 68, puis divisée par un diviseur 74 pour être dans les mêmes grandeurs que le signal de référence. En France par exemple, l'amplitude en sortie de la génératrice 65 doit atteindre une valeur égale à 220×√2 pour que la condition d'amplitude soit atteinte.

La commande des interrupteurs 68 de l'onduleur est du type MLI. La fréquence modulante de cette commande est issue du signal de référence. Pour que le signal en sortie de l'onduleur, une fois filtré par le filtre 69, soit parfaitement synchronisé et en phase avec le signal de référence, la commande MLI de l'onduleur est verrouillée sur la fréquence de référence La fréquence de découpage *fdec* des interrupteurs électroniques 68 est choisie bien supérieure à la fréquence modulante *fmod,* par exemple selon l'équation suivante *fdec*=400×*fmod.*

Le module 16 de production comprend en outre des moyens de fourniture d'une tension d'alimentation basse puissance reliés au module 12 de référence pour pouvoir alimenter ce module 12 de référence.

Ces moyens d'alimentation prélèvent une partie de l'énergie produite par le module 16 de production. Ces moyens d'alimentation sont représentés par une alimentation continue stabilisée 75 et la sortie 63 sur la figure 6.

Sur la figure 6, la génératrice 65 est une génératrice alternative triphasée. Dans le cas où la génératrice est une génératrice alternative monophasée, le redresseur 66 est modifié en conséquence. La définition du redresseur permettant d'obtenir une tension intermédiaire quasiment continue à partir d'une génératrice alternative monophasée est bien connue de l'homme du métier et n'est pas décrite ici en détail.

Dans certains cas, la tension intermédiaire fournie en sortie du redresseur n'est pas compatible avec la tension crête du fournisseur d'énergie électrique du réseau d'utilisation. Il est alors nécessaire de prévoir un élévateur de tension à découpage asservi à la tension crête de référence et piloté par une commande du type MLI.

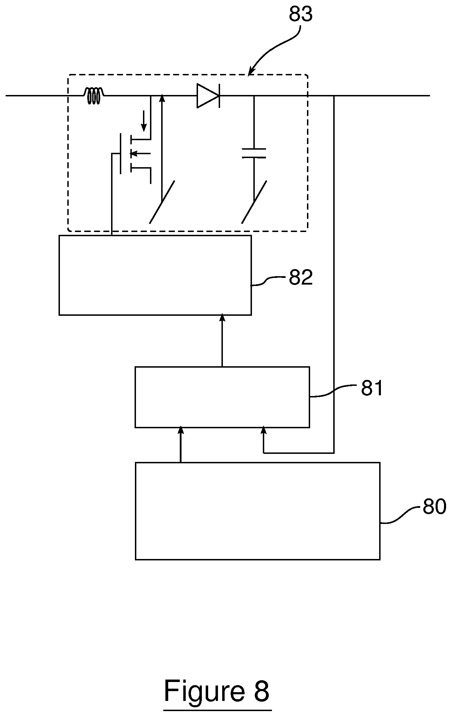

Cet ensemble est schématiquement représenté sur la figure 8 et vient s'agencer entre le redresseur 66 et le filtrage 67 de la figure 6.

Cet ensemble comprend un module 80 d'extraction de la tension crête du signal de référence, un correcteur 81 qui permet de corriger la tension en sortie de l'ensemble en fonction de la tension crête du signal de référence, une commande 82 du type MLI et un élévateur 83 de tension à découpage, bien connue de l'homme du métier.

La figure 7 est une vue schématique représentant l'agencement et les connexions entre deux appareils 24, 25 de production d'énergie électrique, les modules 16 de production associés, le module 12 de référence, la colonne 10 vertébrale et le réseau d'utilisation de l'énergie produite, qui prend ici la forme d'un réseau 11 externe d'un fournisseur d'énergie électrique.

Comme on le constate, chaque appareil 24, 25 comprend un module 16 de production, dont chaque entrée 56 reçoit le signal de référence fournie par la sortie 61 du module 12 de référence pour pouvoir former un signal synchronisé sur le signal de référence. En outre au moins un module 16 de production (chaque module dans le cas de la figure 7) comprend en outre une sortie 63 reliée à l'entrée 51 du module 12 de référence pour fournir une tension d'alimentation du module 12 de référence. De plus, chaque module 16 de production comprend une sortie 64 reliée directement à la colonne 10 vertébrale pour y injecter le signal électrique produit. Ces signaux sont ensuite injectés dans le réseau 11 externe dès que le module 12 de référence ferme le contacteur 42. Si le contacteur 42 n'est pas fermé, l'énergie produite est utilisée pour les besoins internes du bâtiment équipé d'une infrastructure selon l'invention.

L'invention ne se limite pas aux seuls modes de réalisation décrits. En particulier, d'autres types d'appareils de production d'énergie électrique peuvent être mis en oeuvre et s'interconnecter à une infrastructure selon l'invention. Une infrastructure selon l'invention peut comprendre un très grand nombre d'appareils reliés à une colonne 10 vertébrale de manière à pouvoir fournir une quantité importante d'énergie électrique.

L'invention présente une grande souplesse car n'importe quel appareil équipé d'un module de production peut venir se connecter à la colonne vertébrale de l'infrastructure. L'énergie produite est directement compatible avec le réseau d'un fournisseur officiel d'électricité et avec les appareils du bâtiment sur lequel l'infrastructure est agencée. L'invention ne nécessite aucun moyen de stockage de l'énergie produite, qui est soit réinjectée sur le réseau d'un fournisseur d'énergie, soit directement consommée par les appareils du bâtiment.

## Revendications

1. Infrastructure productrice d'énergie électrique comprenant :
- une colonne de distribution d'énergie électrique, dite colonne (10) vertébrale de l'infrastructure adaptée pour véhiculer de l'énergie électrique vers un réseau (9) d'utilisation de cette énergie,
- une pluralité d'appareils (20, 21, 23, 24, 25) de production d'énergie électrique reliés à ladite colonne (10) vertébrale et adaptés pour injecter directement sur ladite colonne (10) vertébrale au moins une partie de l'énergie générée, chaque appareil (20, 21, 23, 24, 25) étant configuré pour pouvoir produire de l'énergie électrique à partir d'un effort mécanique physique exercé par un être animé,
**caractérisée en ce qu'**elle comprend au moins un module de synchronisation, dit module (12) de référence, relié à ladite colonne (10) vertébrale et à chaque appareil (20, 21, 23, 24, 25) de production d'énergie électrique, ledit module (12) de référence étant configuré pour identifier et former un signal de synchronisation, dit signal de référence, adapté pour circuler sur ladite colonne (10) vertébrale et pour permettre la synchronisation de chaque appareil (20, 21, 23, 24, 25) de production avec ladite colonne (10) vertébrale de sorte que chaque appareil (20, 21, 23, 24, 25) puisse directement injecter de l'énergie sur ladite colonne (10) vertébrale,

2. Infrastructure selon la revendication 1, **caractérisée en ce que** chaque (20, 21, 23, 24, 25) appareil de production d'énergie électrique comprend un module (16) de production d'énergie comprenant :
- des moyens (56, 71) de réception et de lecture dudit signal de référence,
- des moyens (65, 66, 67, 68, 69, 74) de production d'un signal électrique synchronisé sur ledit signal de référence,
- des moyens (70, 72) de couplage/découplage de l'appareil à ladite colonne (10) vertébrale.

3. Infrastructure selon l'une des revendications 1 ou 2, **caractérisée en ce qu'**au moins un appareil de production d'énergie comprend des moyens (75, 63) de fourniture d'une tension d'alimentation basse puissance reliés à au moins un module (12) de référence pour pouvoir alimenter ledit module (12) de référence.

4. Infrastructure selon l'une des revendications 1 à 3, **caractérisée en ce qu'**elle comprend un contacteur (42) reliant ladite colonne (10) vertébrale à un réseau (11) externe d'un fournisseur d'énergie électrique.

5. Infrastructure selon l'une des revendications 1 à 4, **caractérisée en ce que** ledit signal de référence est une image du signal circulant sur ledit réseau (11) externe.

6. Infrastructure selon la revendication 5, **caractérisée en ce que** ledit réseau (9) d'utilisation est ledit réseau (11) externe.

7. Infrastructure selon l'une des revendications 1 à 6, **caractérisée en ce que** ledit réseau (9) d'utilisation comprend un réseau interne d'un bâtiment au sein duquel ladite infrastructure est ménagée, ledit réseau interne comprenant une pluralité de dispositifs (30, 31, 32) consommateurs d'énergie électrique,

8. Infrastructure selon l'une des revendications 1 à 7, **caractérisée en ce qu'**au moins un appareil de production d'énergie électrique est un équipement sportif choisi dans le groupe comprenant : un rameur, une bicyclette (24), un tapis roulant (25), une matrice (23) de dalles, de sorte que l'activité physique générée sur cet équipement sportif génère de l'énergie électrique injectée sur la colonne (10) vertébrale.

9. Infrastructure selon l'une des revendications 1 à 8, **caractérisée en ce qu'**au moins un appareil de production d'énergie électrique comprend une génératrice (65) de courant configurée pour pouvoir être entraînée en rotation par un effort mécanique physique exercé par un être animé.

10. Infrastructure selon la revendication 9, **caractérisée en ce que** ladite génératrice de courant d'au moins un appareil de production d'énergie électrique est choisie dans le groupe comprenant : une génératrice à courant continu, une génératrice alternative monophasée et une génératrice alternative triphasée.

11. Bâtiment comprenant une infrastructure selon l'une des revendications 1 à 10.

12. Bâtiment selon la revendication 11, **caractérisé en ce qu'**il comprend au moins une salle de sports comprenant une pluralité d'équipements sportifs, chaque équipement sportif formant un appareil de production d'énergie électrique relié à ladite colonne (10) vertébrale de l'architecture.

13. Bâtiment selon l'une des revendications 11 ou 12, **caractérisé en ce qu'**il comprend une pluralité de dispositifs électriques consommateurs d'énergie électrique reliés à ladite infrastructure de manière à pouvoir être alimentés en énergie électrique par l'énergie produite par ladite infrastructure.

14. Appareil de production d'énergie électrique pour une infrastructure (8) productrice d'énergie électrique comprenant une colonne de distribution d'énergie électrique, dite colonne (10) vertébrale de l'infrastructure, adaptée pour véhiculer de l'énergie électrique vers un réseau (9) d'utilisation de cette énergie, configuré pour pouvoir produire de l'énergie électrique à partir d'un effort mécanique physique exercé par un être animé et **caractérisé en ce qu'**il comprend un module de production d'une puissance électrique comprenant :
- des moyens (56, 71) de réception et de lecture d'un signal de synchronisation, dit signal de référence, identifié et/ou formé par un module de synchronisation, dit module (12) de référence, relié à la colonne (10) vertébrale et audit appareil, ledit signal de référence étant adapté pour circuler sur la dite colonne (10) vertébrale et permettre la synchronisation de l'appareil sur la colonne (10) vertébrale,
- des moyens (65, 66, 67, 68, 69, 74) de production d'un signal électrique synchronisé sur ledit signal de référence,
- des moyens (70, 72) de couplage/découplage de l'appareil à ladite colonne vertébrale.

## Patentansprüche

1. Einrichtung zum Erzeugen elektrischer Energie, welche umfasst:
eine Säule zum Verteilen elektrischer Energie, die als ein Hauptstrang (10) der Einrichtung bezeichnet wird und geeignet ist, elektrische Energie in ein Netzwerk (9) um die Energie zu vereenden,
mehrere Vorrichtungen (20, 21, 23, 24, 25) zum Erzeugen elektrischer Energie, die mit dem Hauptstrang (10) verbunden und zum Einspeisen mindestens eines Teils der erzeugten Energie direkt in den Hauptstrang (10) geeignet sind, worin jede Vorrichtung (20, 21, 23, 24, 25) ausgestaltet ist, elektrische Energie aus einer durch ein Lebewesen ausgeübten physischen mechanischen Kraft erzeugen zu können,
**dadurch gekennzeichnet, dass** die Einrichtung mindestens ein Synchronisationsmodul umfasst, das als Referenzmodul (12) bezeichnet wird, welches mit dem Hauptstrang (10) und mit jeder Vorrichtung (20, 21, 23, 24, 25) zum Erzeugen elektrischer Energie verbunden ist, worin das Referenzmodul (12) ausgestaltet ist, ein Synchronisationssignal zu identifizieren und auszubilden, welches als ein Referenzsignal bezeichnet wird, und geeignet ist, auf dem Hauptstrang (10) zu laufen und die Synchronisation jeder Erzeugungsvorrichtung (20, 21, 23, 24, 25) mit dem Hauptstrang (10) zu ermöglichen, so dass jede Vorrichtung (20, 21, 23, 24, 25) direkt Energie in den Hauptstrang (10) einspeisen kann.

2. Einrichtung nach Anspruch 1, **dadurch gekennzeichnet, dass** jede Vorrichtung (20, 21, 23, 24, 25) zum Erzeugen elektrischer Energie ein Modul (16) zum Erzeugen von Energie umfasst, welches umfasst:
- Mittel (56, 71) zum Empfangen und Auslesen des Referenzsignals,
- Mittel (65, 66, 67, 68, 69, 74) zum Erzeugen eines elektrischen Signals, das mit dem Referenzsignal synchronisiert ist,
- Mittel (70, 72) zum Koppeln/Entkoppeln der Vorrichtung mit/von dem Hauptstrang (10).

3. Einrichtung nach einem der Ansprüche 1 oder 2, **dadurch gekennzeichnet, dass** mindestens eine Vorrichtung zum Erzeugen von Energie Mittel (75, 63) zum Bereitstellen einer Niedrig-Energie-Versorgungsspannung umfasst, die mindestens mit einem Referenzmodul (12) verbunden sind, um das Referenzmodul (12) mit Energie versorgen zu können.

4. Einrichtung nach einem der Ansprüche 1 bis 3, **dadurch gekennzeichnet, dass** diese ein Schaltgerät (42) umfasst, das den Hauptstrang (10) mit einem externen Netzwerk (11) einer elektrischen Energieversorgung verbindet.

5. Einrichtung nach einem der Ansprüche 1 bis 4, **dadurch gekennzeichnet, dass** das Referenzsignal ein Abbild des durch das externe Netzwerk (11) laufenden Signals ist.

6. Einrichtung nach Anspruch 5, **dadurch gekennzeichnet, dass** das Verwendungs-Netzwerk (9) das externe Netzwerk (11) ist.

7. Einrichtung nach einem der Ansprüche 1 bis 6, **dadurch gekennzeichnet, dass** das Verwendungs-Netzwerk (9) ein internes Netzwerk eines Gebäudes in dem die Einrichtung bereitgestellt wird, umfasst, worin das interne Netzwerk mehrere Geräte (30, 31, 32) umfasst, die elektrische Energie verbrauchen.

8. Einrichtung nach einem der Ansprüche 1 bis 7, **dadurch gekennzeichnet, dass** mindestens eine Vorrichtung zum Erzeugen elektrischer Energie ein Sportgerät ist, ausgewählt aus der Gruppe bestehend aus: einem Rudergerät, einem Fahrrad (24), einem Laufband (25), oder einer Anordnung (23) von Polstern, so dass die auf diesen Sportgeräten erzeugte körperliche Aktivität elektrische Energie erzeugt, die in den Hauptstrang (10) eingespeist wird.

9. Einrichtung nach einem der Ansprüche 1 bis 8, **dadurch gekennzeichnet, dass** mindestens eine Vorrichtung zum Erzeugen elektrischer Energie einen Stromgenerator (65) umfasst, der ausgestaltet ist, durch eine durch ein Lebewesen ausgeübte körperliche mechanische Kraft gedreht werden zu können.

10. Einrichtung nach Anspruch 9, **dadurch gekennzeichnet, dass** der Stromgenerator mindestens eine Vorrichtung zum Erzeugen elektrischer Energie ist ausgewählt aus der Gruppe umfassend: einen DC-Generator, einen Einzelphasen-AC-Generator und einen Dreiphasen-AC-Generator.

11. Gebäude, welches eine Einrichtung nach einem der Ansprüche 1 bis 10 umfasst.

12. Gebäude nach Anspruch 11, **dadurch gekennzeichnet, dass** es mindestens eine Sporthalle umfasst, die mehrere Sportgeräte umfasst, worin jedes Sportgerät eine Vorrichtung zum Erzeugen elektrischer Energie ausbildet, die mit dem Hauptstrang (10) der Einrichtung verbunden ist.

13. Gebäude nach einem der Ansprüche 11 oder 12, **dadurch gekennzeichnet, dass** es mehrere elektrische Geräte umfasst, die elektrische Energie verbrauchen und mit der Einrichtung verbunden sind, um so mit elektrischer Energie versorgt werden zu können, die durch die Einrichtung erzeugt wurde.

14. Vorrichtung zum Erzeugen elektrischer Energie für eine Einrichtung (8), die elektrische Energie erzeugt und eine Säule zum Verteilen elektrischer Energie umfasst, die als ein Hauptstrang (10) der Einrichtung bezeichnet wird und geeignet ist, elektrische Energie zum Verwenden dieser Energie in ein Netzwerk (9) zu leiten, worin die Vorrichtung ausgestaltet ist, elektrische Energie aus einer mechanischen körperliche Kraft erzeugen zu können, die durch ein Lebewesen ausgeübt wird und **dadurch gekennzeichnet ist, dass** sie ein Modul zum Erzeugen elektrischer Energie aufweist, welches umfasst:
- Mittel (56, 71) zum Empfangen und Auslesen eines als ein Referenzsignal bezeichneten Synchronisationssignals, das durch ein als ein Referenzmodul (12) bezeichnetes Synchronisationsmodul identifiziert und/oder ausgebildet wird, das mit dem Hauptstrang (10) und mit der Vorrichtung verbunden ist, worin das Referenzsignal geeignet ist, durch den Hauptstrang (10) zu laufen und die Synchronisation der Vorrichtung mit dem Hauptstrang (10) zu ermöglichen,
- Mittel (65, 66, 67, 68, 69, 74) zum Erzeugen eines elektrischen Signals, das mit dem Referenzsignal synchronisiert ist,
- Mittel (70, 72) zum Koppeln/Entkoppeln der Vorrichtung mit/von dem Hauptstrang.

## Claims

1. Infrastructure for producing electric power, comprising:
a column for distributing electric power, which is referred to as a backbone (10) of the infrastructure and is suitable for conveying electric power to a network (9) for using this power,
a plurality of apparatuses (20, 21, 23, 24, 25) for producing electric power, which are connected to said backbone (10) and suitable for feeding at least some of the generated power directly to said backbone (10), each apparatus (20, 21, 23, 24, 25) being designed to be able to produce electric power from a physical mechanical force exerted by a living being,
**characterized in that** said infrastructure comprises at least one synchronization module, referred to as a reference module (12), which is connected to said backbone (10) and to each apparatus (20, 21, 23, 24, 25) for producing electric power, said reference module (12) being designed to identify and form a synchronization signal, referred to as a reference signal, suitable for traveling on said backbone (10) and for allowing the synchronization of each production apparatus (20, 21, 23, 24, 25) with said backbone (10) such that each apparatus (20, 21, 23, 24, 25) can directly feed power to said backbone (10).

2. Infrastructure according to claim 1, **characterized in that** each apparatus (20, 21, 23, 24, 25) for producing electric power comprises a module (16) for producing power, comprising:
- means (56, 71) for receiving and reading said reference signal,
- means (65, 66, 67, 68, 69, 74) for producing an electrical signal that is synchronized with said reference signal,
- means (70, 72) for coupling/decoupling the apparatus to/from said backbone (10).

3. Infrastructure according to either claim 1 or claim 2, **characterized in that** at least one apparatus for producing power comprises means (75, 63) for providing a low-power supply voltage, which means are connected to at least one reference module (12) in order to be able to power said reference module (12).

4. Infrastructure according to any of claims 1 to 3, **characterized in that** it comprises a contactor (42) connecting said backbone (10) to an external network (11) of an electric power supplier.

5. Infrastructure according to any of claims 1 to 4, **characterized in that** said reference signal is an image of the signal traveling around said external network (11).

6. Infrastructure according to claim 5, **characterized in that** said use network (9) is said external network (11).

7. Infrastructure according to any of claims 1 to 6, **characterized in that** said use network (9) comprises an internal network of a building in which said infrastructure is provided, said internal network comprising a plurality of devices (30, 31, 32) that consume electric power.

8. Infrastructure according to any of claims 1 to 7, **characterized in that** at least one apparatus for producing electric power is a piece of sports equipment selected from the group comprising: a rowing machine, a bicycle (24), a treadmill (25), or an array (23) of pads, such that the physical activity generated on this piece of sports equipment generates electric power which is fed to the backbone (10).

9. Infrastructure according to any of claims 1 to 8, **characterized in that** at least one apparatus for producing electric power comprises a current generator (65) which is designed to be able to be rotated by a physical mechanical force exerted by a living being.

10. Infrastructure according to claim 9, **characterized in that** said current generator of at least one apparatus for producing electric power is selected from the group comprising: a DC generator, a single-phase AC generator and a three-phase AC generator.

11. Building comprising an infrastructure according to any of claims 1 to 10.

12. Building according to claim 11, **characterized in that** it comprises at least one sports hall comprising a plurality of pieces of sports equipment, each piece of sports equipment forming an apparatus for producing electric power which is connected to said backbone (10) of the infrastructure.

13. Building according to either claim 11 or claim 12, **characterized in that** it comprises a plurality of electrical devices that consume electric power and are connected to said infrastructure so as to be able to be supplied with electric power by the power produced by said infrastructure.

14. Apparatus for producing electric power for infrastructure (8) that produces electric power and comprises a column for distributing electric power, which is referred to as a backbone (10) of the infrastructure and is suitable for conveying electric power to a network (9) for using this power, which apparatus is designed to be able to produce electric power from a mechanical physical force exerted by a living being and is **characterized in that** it comprises a module for producing electric power, comprising:
- means (56, 71) for receiving and reading a synchronization signal, referred to as a reference signal, identified and/or formed by a synchronization module, referred to as a reference module (12), which is connected to the backbone (10) and to said apparatus, said reference signal being suitable for traveling around said backbone (10) and for allowing the synchronization of the apparatus with the backbone (10),
- means (65, 66, 67, 68, 69, 74) for producing an electrical signal that is synchronized with said reference signal,
- means (70, 72) for coupling/decoupling the apparatus to/from said backbone.
